# EUROPEAN PATENT SPECIFICATION

(11) **EP 4 319 086 B1**
(45) Date of publication and mention of the grant of the patent: **22.07.2026**
(21) Application number: 22188935.5
(22) Date of filing: 05.08.2022
(51) Int. Cl.: H04L 43/06, H04L 41/0233, H04L 41/0631, H04L 41/16, H04L 41/14, H04L 41/0663

(54) **COMMUNICATION NETWORK**
KOMMUNIKATIONSNETZWERK
RÉSEAU DE COMMUNICATION

(43) Date of publication of application: 07.02.2024
(73) Proprietor: Nokia Technologies Oy, 02610 Espoo (FI)
(72) Inventor: ABDELKADER, Abdelrahman, 80809 Munich (DE); MWANJE, Stephen, 84405 Dorfen (DE)
(74) Representative: TBK

(56) References cited:
- EP-A2- 0 357 573
- US-A1- 2009 282 292
- "3rd Generation Partnership Project; Technical Specification Group Services and System Aspects; Management and orchestration; Study on enhancement of Management Data Analytics (MDA) (Release 17)", no. V1.1.0, 4 December 2020 (2020-12-04), pages 1 - 93, XP051961771, Retrieved from the Internet <URL:https://ftp.3gpp.org/Specs/archive/28_series/28.809/28809-110.zip 28809-110.docx> [retrieved on 20201204]
- "3rd Generation Partnership Project; Technical Specification Group Services and System Aspects; Management and orchestration; Study on enhancement of Management Data Analytics (MDA) (Release 17)", vol. SA WG5, no. V17.0.0, 6 April 2021 (2021-04-06), pages 1 - 96, XP052000543, Retrieved from the Internet <URL:https://ftp.3gpp.org/Specs/archive/28_series/28.809/28809-h00.zip 28809-h00.docx> [retrieved on 20210406]

## Description

### TECHNICAL FIELD

At least some example embodiments relate to the field of wireless network control and management, for example Orchestration & Automation (O&A) systems, SON, MANO, Cloud RAN, 5G Core NFV, NW Security IPS/IDS, wireless Enterprise NW Management, etc.

### BACKGROUND

Increase in density and complexity of today's and future mobile networks requires increase in the level of automation within the network to simplify network operations. For this purpose, Artificial Intelligence and specifically Machine Learning (AIML) has been promoted as the means to achieve this advanced automation. In fact, AIML is already playing a significant role in network management and orchestration in today's networks.

The typical way of applying AIML solutions is that each solution is made specifically for a particular use case, problem and context of network optimization/management. Then, operators have to deploy and trigger each specific solution to solve a specific network problem. This requires operators to keep track of the different solutions and when to trigger them, a task that limits the scalability of these network automation capabilities.

EP 0 357 573 A2 relates to automatic equipment analysis.

### LIST OF ABBREVIATIONS

- 3GPP: Third Generation Partnership Project
- 5G: Fifth Generation
- AIML: Artificial Intelligence and Machine Learning
- C: Condition
- ON: Distinguished Name
- F: False
- IDS: Intrusion Detection System
- IPS: Intrusion Prevention System
- IRP: Integration Reference Point
- IS: Information Service
- KPI: Key Performance Indicator
- M: Mandatory
- MANO: Management and Orchestration
- MDA: Management Data Analytics
- MIB: Management Information Base
- MnS: Management Service
- MOI: Managed Object Instance
- NFV: Network Functions Virtualization
- NW: Network
- NRM: Generic Network Resource Model
- O: Optional
- O&A: Orchestration & Automation
- RAN: Radio Access Network
- SA: Service and System Aspects
- SDN: Software-Defined Networking
- SOC: Security Operations Center
- SON: Self-Organizing Networks
- T: True

### LIST OF REFERENCES

[1] 3GPP TS 28.104, version 17.0.1: Management and orchestration; Management Data Analytics
[2] 3GPP TS 28.622, version 17.2.0: Telecommunication management; Generic Network Resource Model (NRM); Integration Reference Point (IRP); Information Service (IS)

### SUMMARY

The invention is specified by the independent claims. Exemplary embodiments are defined in the dependent claims.

In an effort to move towards fully automated network management, the effort made by operators in observing, reporting and analyzing network problems, as well as managing and triggering appropriate solutions has to be reduced. In other words, means through which the operator only triggers the system to analyze and identify if there is a problem and to trigger the system to classify the problem and look for a suitable solution for that problem within available solutions are required. The following example embodiments / aspects are not according to the invention and are present for illustration purposes only.

At least some example embodiments aim at providing means for detecting network problems and analyzing the problems to classify them in a way that enables an automated mapping to or derivation of appropriate solutions. According to at least some example embodiments, this is achieved by an apparatus, a method, and a non-transitory computer-readable storage medium as specified by the appended claims.

According to some aspects, there is provided the subject matter of the independent claims. Some further aspects are defined in the dependent claims.

According to an aspect, an apparatus of a communication network is provided, the apparatus comprising:
means for receiving a request for problem analysis from a consumer;
means for, based on the request, acquiring information with respect to a problem related to the communication network;
means for performing the problem analysis based on the information, the problem analysis comprising:
   checking whether or not the information matches at least one of a plurality of problem profiles; and
   in case the information does not match at least one of the plurality of problem profiles, conducting learning of a new problem profile related to the problem based on the information; and
means for returning a report on the problem analysis performed to the consumer.

According to at least some example embodiments, the means comprises at least one processor, and at least one memory including computer program code, the at least one memory and computer program code configured to, with the at least one processor, cause the performance of the apparatus.

In the following, some example embodiments will be described with reference to the accompanying drawings.

### BRIEF DESCRIPTION OF THE DRAWINGS

Fig. 1 shows a schematic diagram illustrating a process of network problem analysis according to at least some example embodiments.
Fig. 2 shows a schematic diagram illustrating network problem analysis as an integration of three subfunctions of detection, classification and solution search according to at least some example embodiments.
Fig. 3 shows a flowchart illustrating an analysis process according to at least some example embodiments.
Fig. 4 shows a schematic diagram illustrating an information model for a problem analytics function according to at least some example embodiments.
Fig. 5 shows a schematic diagram illustrating inheritance relations for the problem analytics function according to at least some example embodiments.
Fig. 6 shows a schematic diagram illustrating an information model for an MDA function according to at least some example embodiments.
Fig. 7 shows a schematic diagram illustrating inheritance relations for the MDA function according to at least some example embodiments.
Fig. 8 shows a table illustrating attributes of a problem analytics function according to at least some example embodiments.
Fig. 9 shows a table illustrating attributes of a problem analytics request according to at least some example embodiments.
Fig. 10 shows a table illustrating attributes of a problem analytics job according to at least some example embodiments.
Fig. 11 shows a table illustrating attributes of a problem profile according to at least some example embodiments.
Fig. 12 shows a table illustrating attributes of problem information according to at least some example embodiments.
Fig. 13 shows a table illustrating attributes of a problem analytics reporting request according to at least some example embodiments.
Fig. 14 shows a table illustrating attributes of a problem analytics report according to at least some example embodiments.
Fig. 15 shows a signaling diagram illustrating signaling between a consumer requesting problem analytics and a problem analytics instance according to at least some example embodiments.
Fig. 16 shows a signaling diagram illustrating a problem analytics procedure according to at least some example embodiments.
Fig. 17 shows a schematic block diagram illustrating a control unit in which example embodiments are implementable.

### DESCRIPTION OF THE EMBODIMENTS

According to at least some example embodiments, a problem analytics function (which is also referred to here as "problem analysis function", "ProblemAnalytics" or "MnS") is provided as an instance/apparatus with functions to detect network problems and to analyze the problems to classify them in a way that enables an automated mapping to or derivation of appropriate solutions.

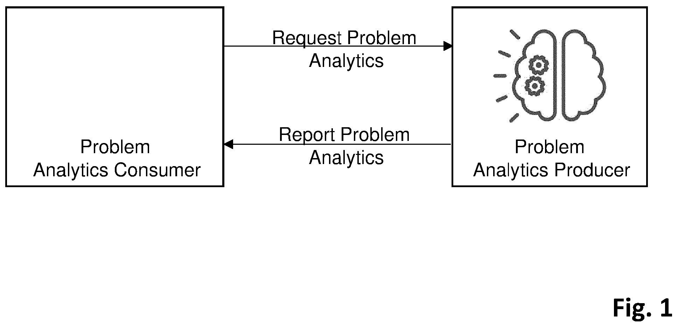

Fig. 1 shows a schematic diagram illustrating a process of network problem analysis according to at least some example embodiments. As shown in Fig. 1, a problem analytics consumer (here also referred to simply as "consumer") requests problem analytics (here also referred to as "problem analysis") from a problem analytics producer (which is also referred to here as "ProblemAnalytics", or simply "producer"). The problem analytics producer performs the requested problem analytics and returns a report on the problem analytics performed to the problem analytics consumer.

According to at least some example embodiments, the ProblemAnalytics is a logical entity that enables at least one of the following aspects (1) to (4):
(1) An authorized consumer to request a producer for an appropriate automation function for a given problem characterized/classified as belonging to a specified problem class:
   o The consumer sends to or instantiates on the ProblemAnalytics a request for analytics (this request is also referred to here as "ProblemAnalyticsRequest", "problem analytics request", or "request for problem analysis") that specifies a problem and the need to find an appropriate automation function to address that problem type.
   ∘ According to at least some example embodiments, the request includes an indication to trigger the execution of such a solution (automation function) if found.
   ∘ Following the request, according to at least some example embodiments, the producer, besides triggering execution of the solution, reports to the consumer about the automation function identified as appropriate for resolving the stated problem.
**(2) An authorized** consumer to request a producer to characterize and classify an observed or a suspected network problem in a given network scope or as related to a specified context or network conditions:
   ∘ The consumer sends to or instantiates on the ProblemAnalytics a ProblemAnalyticsRequest that specifies the observed/suspected problem and the need to analyze it and determine its corresponding problem type. Alternatively, according to at least some example embodiments, instead of specifying the observed/suspected problem, the request states the features/characteristics of the problem and the network scope where these have been detected, which information can then be used by the ProblemAnalytics to classify the kind of problem and determine the problem type.
   ∘ According to at least some example embodiments, the problem is classified according to a standardized set of problem types (e.g. as defined in [1]) or into a proprietary set of types.
   ∘ According to at least some example embodiments, the request includes a request for recommendation of the appropriate automation function to be triggered to address the problem.
   ∘ According to at least some example embodiments, following the request, the producer reports to the consumer about the identified problem type, and where applicable about the automation function identified as appropriate for resolving the stated problem.
(3) An authorized consumer to request a producer to monitor and analyze a given network scope to identify any network problems including but not limited to anomalies, performance degradation, alarms, network faults, and less than optimal KPIs. According to at least some example embodiments, the ProblemAnalytics is triggered by an operator, a network function or by another automation function such as an existing event notification service (e.g. for monitoring faults, thresholds, etc.):
   ∘ The consumer sends to or instantiates on the ProblemAnalytics a request for analytics ("ProblemAnalyticsRequest", "request for problem analysis") that specifies a network scope to be analyzed and the need to analyze it for any problem(s).
   ∘ According to at least some example embodiments, the network scope defines a set of managed objects (e.g. cells, gNBs, etc.), a geographical area e.g. as a polygon, or a GeoArea as defined in [2].
   ∘ According to at least some example embodiments, the request for detection also includes a request to classify the problem or a request for recommendation of the appropriate automation function to be triggered to address the problem.
   ∘ According to at least some example embodiments, following the request, the producer reports to the consumer about the detected problem and the report includes a classification of the problem as well as the identified appropriate automation function needed to be executed to address the problem.

According to at least some example embodiments, as an aspect (4), the ProblemAnalytics further enables a producer to report to an authorized consumer the outcomes of a detection of a problem, of a characterization or classification of a detected problem, or of the solution search for a given problem class.

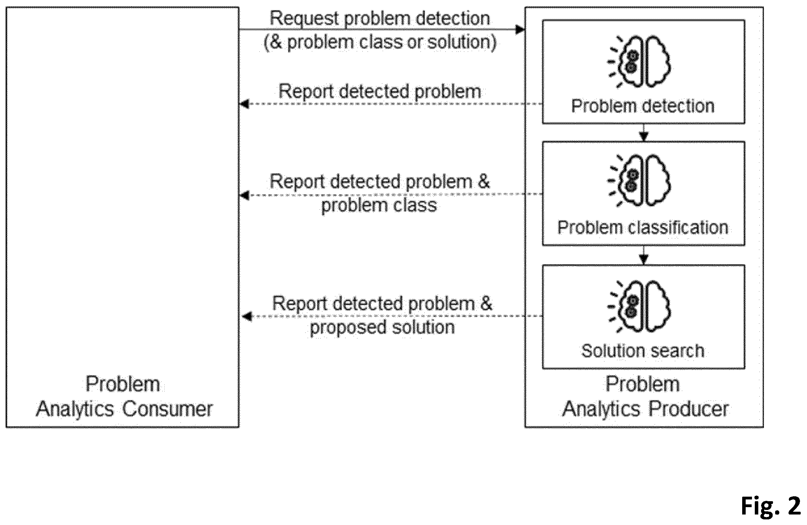

The ProblemAnalytics may be implemented as three separate components of "problem detection", "problem classification", and "solution search" that interact with one another or as a single integrated function that accomplishes all the three roles or aspects as illustrated in Fig. 2.

Fig. 2 shows a schematic diagram illustrating network problem analysis as an integration of three subfunctions of detection, classification and solution search according to at least some example embodiments.

According to aspect (3) above, the request for problem analysis is a request for problem detection, which the consumer sends to the producer. The producer returns a report on the problem analysis performed, including information on a detected problem.

According to aspect (2) above, the request for problem analysis is a request for problem classification, which the consumer sends to the producer. The producer returns a report on the problem analysis performed, including information on a problem class.

According to aspect (1) above, the request for problem analysis is a request for solution search, which the consumer sends to the producer. The producer returns a report on the problem analysis performed, including information on a proposed solution.

As an integrated function, according to at least some example embodiments, the ProblemAnalytics:
- Detects network problems (e.g. anomalies, performance degradation, less than optimal KPIs) when triggered by an operator or by existing event notification service events (faults, thresholds, etc.).
- Analyzes the detected problem or a reported problem according to accompanying context and network conditions to first classify a problem type (e.g. handover, coverage, capacity, service related, etc.).
- Finds, based on the classification of problem type, the most appropriate automation function as the solution for the problem:
   o According to at least some example embodiments, finding the most appropriate automation function is done via a search operation through a list of available solutions and their corresponding problem types and contexts.
   ∘ Additionally, according to at least some example embodiments, ProblemAnalytics requests further information from the consumer or executes data collection jobs on the network to assist in the solution identification and search. For example, this extra information is needed to determine the level of compatibility between the problem and the solution.

If an appropriate solution exists that fits the use case, problem and context then ProblemAnalytics triggers the execution of this solution, providing the relevant information/data needed for the solution to work. Otherwise, if an appropriate solution does not exist that fits the use case, problem or context, then ProblemAnalytics returns a report to the consumer stating the relevant information of the problem and indicating that no solution has been found.

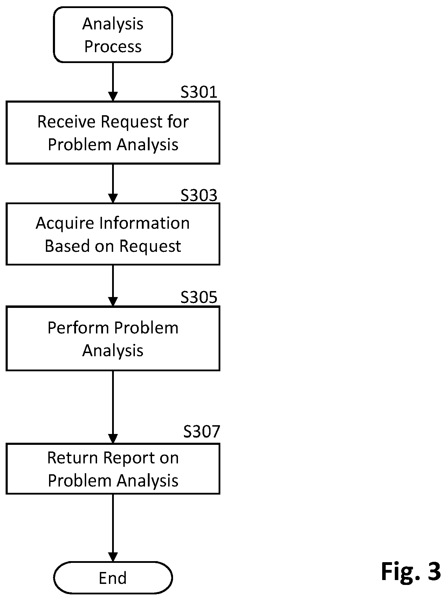

Now reference is made to Fig. 3 showing a flowchart of an analysis process according to at least some example embodiments. According to at least some example embodiments, the analysis process is performed by the problem analytics producer ("ProblemAnalytics") described above.

In step S301, a request for problem analysis is received from a consumer. The, the analysis process advances to step S303. According to at least some example embodiments, the request is a ProblemAnalyticsRequest as described above.

In step S303, based on the request, information with respect to a problem related to a communication network is acquired. The, the analysis process advances to step S305. According to at least some example embodiments, the information is acquired from at least one of the following: the request or the communication network.

It is noted that, as used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In step S305, the problem analysis is performed based on the information. The, the analysis process advances to step S307. The problem analysis comprises checking whether or not the information matches at least one of a plurality of problem profiles. According to at least some example embodiments, the problem profiles have been defined in advance.

The problem analysis further comprises that, in case the information does not match at least one of the plurality of problem profiles, learning of a new problem profile related to the problem is conducted based on the information.

In step S307, a report on the problem analysis performed is returned to the consumer. Then, the analysis process ends.

According to at least some example embodiments, the problem analysis of step S305 further comprises that, in case the information matches at least one of the plurality of problem profiles, solutions to the problem are searched based on the at least one of the plurality of problem profiles.

According to at least some example embodiments, the problem analysis of step S305 further comprises applying at least one of the searched solutions to the communication network.

According to at least some example embodiments, with respect to aspect (1) above, in step S305, the checking is performed in response to the request being a request including the information with respect to the problem.

According to at least some example embodiments, with respect to aspect (2) above, in step S305, in response to the request being a request for classifying the problem, the information with respect to the problem is identified.

According to at least some example embodiments, with respect to aspect (3) above, in step S305, the communication network is monitored and analyzed based on the request being a request for identifying any problem, in order to identify the problem.

According to at least some example embodiments, the problem analysis of step S305 further comprises checking, based on the information acquired in step S303, whether or not a job (which is also referred to here as "ProblemAnalyticsJob" or "problem analytics job") for processing the information is ongoing. In case such a job is not ongoing, the job for processing the information is instantiated. Otherwise, in case such a job is ongoing, requirements of a request which includes the information are added to the job.

According to at least some example embodiments, the problem analysis function ("ProblemAnalytics") is implemented as a standalone function in the communication network. Alternatively, the problem analysis function is implemented as a generic data analytics function of the communication network using a generic data analytics service.

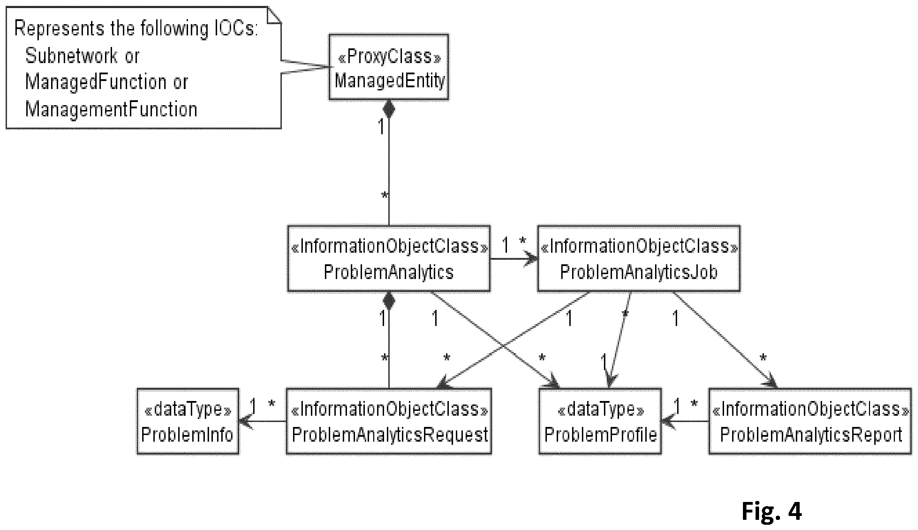

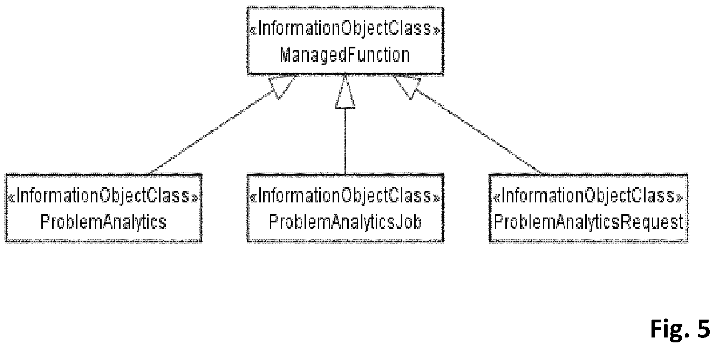

Fig. 4 shows an information model and Fig. 5 shows inheritance relations for the case that the problem analysis function is a standalone function on which a problem analysis process (e.g. the analysis process of Fig. 3) may be instantiated.

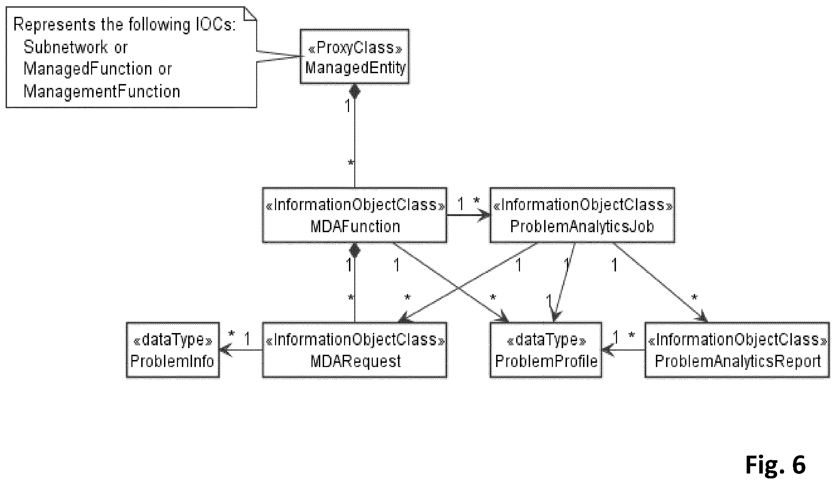

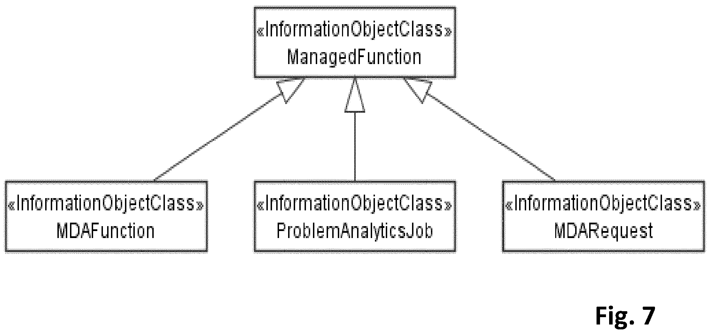

Fig. 6 shows an information model and Fig. 7 shows inheritance relations for the case that the problem analysis function is a capability on generic analytics functions, i.e. the problem analysis function uses a generic analytics service (e.g. MDAS described [1]).

IOC "ProblemAnalytics" illustrated in Figs. 4 and 5 represents a problem analysis on MnS producer. As described above, ProblemAnalytics is responsible for problem analysis and the related reporting. According to at least some example embodiments, ProblemAnalytics is contained in a subnetwork, a managed network function or in a management function of the communication network.

ProblemAnalytics stores the problem profiles for different problems that can be analyzed and instantiates ProblemAnalyticsRequests and ProblemAnalyticsJobs as requested by the authorised consumers.

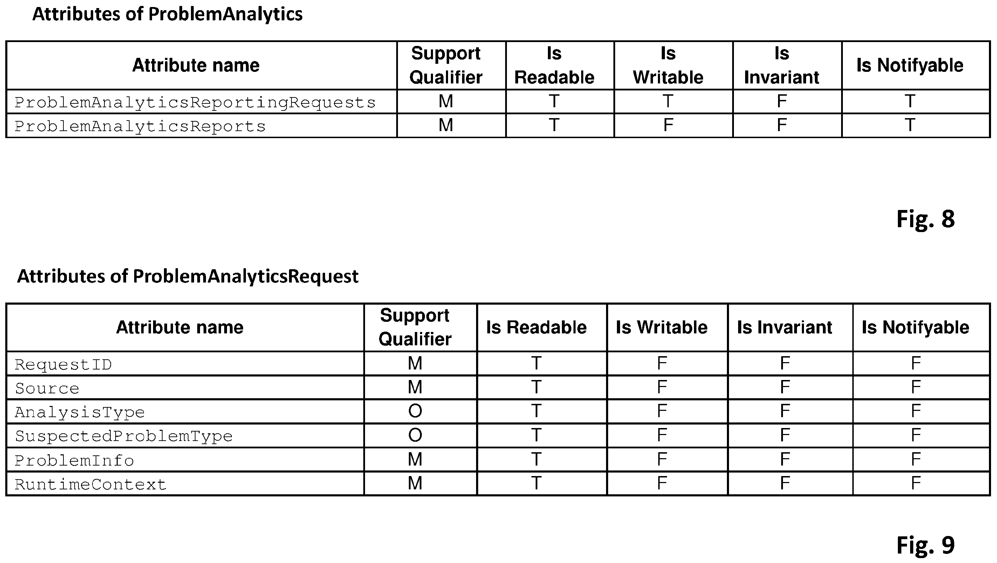

Fig. 8 shows a table illustrating attributes of ProblemAnalytics according to at least some example embodiments. These attributes comprise ProblemAnalyticsReportingRequests (which are also referred to here as "problem analytics reporting requests") and ProblemAnalyticsReports (which are also referred to here as "problem analytics report"), which will be described in more detail later on.

According to the case illustrated by Figs. 6 and 7, the capabilities and attributes of the ProblemAnalytics are features of MDAFunction (which is also referred to here as "MDA function").

In the following, the ProblemAnalyticsRequest will be described in more detail.

IOC "ProblemAnalyticsRequest" illustrated in Figs. 4 and 5 represents a problem analysis request on MnS producer.

ProblemAnalyticsRequests are created by authorized consumers for each needed analytics, i.e., ProblemAnalyticsRequest is an IOC instantiated by authorized consumers on ProblemAnalytics for each analytics needed.

According to at least some example embodiments, ProblemAnalyticsRequests are associated with a ProblemAnalyticsJob, if such job has been instantiated and is related to that request. For example, if the ProblemAnalytics requires that a ProblemAnalyticsJob is instantiated only after receiving a number n of ProblemAnalyticsRequests, each of the ProblemAnalyticsRequests can be associated with the ProblemAnalyticsJob whenever such a job is instantiated.

Fig. 9 shows a table illustrating the attributes of ProblemAnalyticsRequest according to at least some example embodiments. The ProblemAnalyticsRequest includes a request ID attribute which identifies the request.

Further, as shown in Fig. 9, the ProblemAnalyticsRequest has a source attribute to identify where it is coming from and which may be used to prioritize among different sources. The sources may for example be an enumeration defined for network functions, operator roles, or other functional differentiations.

According to at least some example embodiments, the ProblemAnalyticsRequest specifies an AnalysisType (see attribute "AnalysisType" in Fig. 9). The type of analytics/analysis is, for example, problem detection, problem type classification (problem classification), solution search and reporting, as described above with reference to Fig. 2. If no AnalysisType is specified, default analytics type is set to solution search and reporting.

The ProblemAnalyticsRequest provides information on the problem to be analyzed. According to at least some example embodiments, based on the AnalysisType provided, attribute "ProblemInfo" is in the form of affected KPIs, errors, faults, or threshold crossings. Alternatively, according to at least some example embodiments, ProblemInfo is in the form of anomalous data collected from the network that deviates from normal/average behavior and requires further investigation to pin point the underlying problem if any.

According to at least some example embodiments, the ProblemAnalyticsRequest comprises an attribute "SuspectedProblemType" which comprises information on a type of a problem suspected by the consumer.

The ProblemAnalyticsRequest specifies a runtime context (attribute "RuntimeContext") describing relevant information to the problem to be analyzed, e.g. time of day, geographical scope, gNB/cell ID. This context influences the analytics process in that the runtime context may hold insights about the problem and a possible solution.

According to the case illustrated by Figs. 6 and 7, the capabilities and attributes of the ProblemAnalyticsRequest are features of MDARequest.

In the following the problem analytics job (ProblemAnalyticsJob) will be described in more detail.

IOC "ProblemAnalyticsJob" illustrated in Figs. 4 to 7 represents a problem analytics job on MnS producer.

According to at least some example embodiments, for each problem profile (which is also referred to here as "ProblemProfile") being analyzed, a ProblemAnalyticsJob is instantiated, i.e. the ProblemAnalyticsJob is associated with exactly one ProblemProfile (one problem profile of the plurality of problem profiles described with respect to Fig. 3).

For each ProblemProfile being analyzed, the associated ProblemAnalyticsJob may find the most appropriate automation function as the solution for the problem.

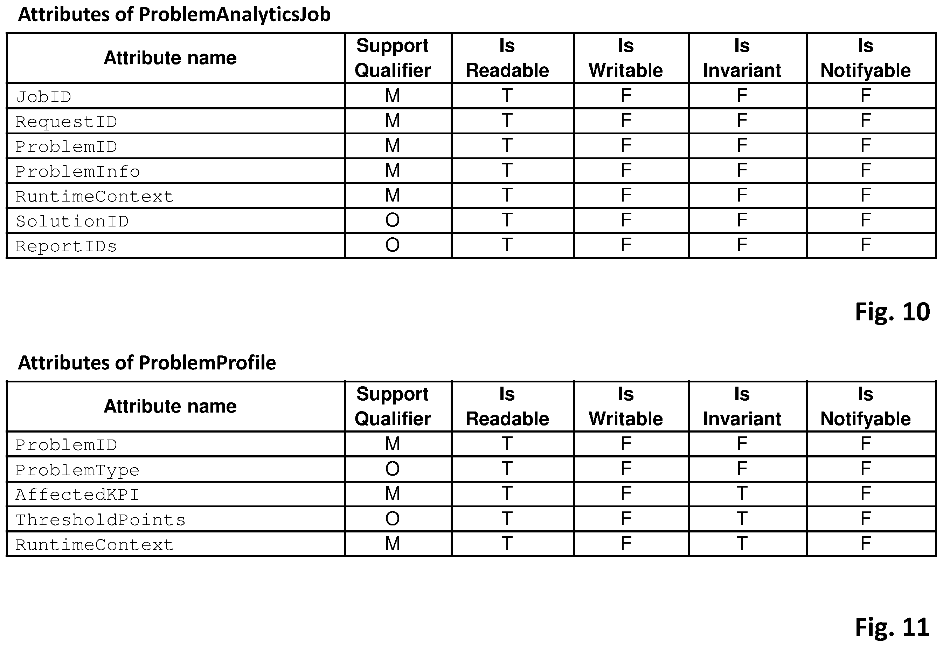

Fig. 10 shows a table illustrating attributes of the ProblemAnalyticsJob. The attributes comprise JobID (identification/identifier of the ProblemAnalyticsJob), RequestID (identification/identifier of the ProblemAnalyticsRequest which the ProblemAnalyticsJob is associated with, ProblemID (e.g. identification/identifier of the problem related to the communication network), ProblemInfo (e.g. information with respect to the problem), RuntimeContext (which is also referred to here as "runtime context"), SolutionID (identification/identifier of the solution), and ReportIDs (identifications/identifiers of reports).

Besides the ProblemProfile, Solution and the ProblemAnalyticsRequest, the ProblemAnalyticsJob is associated with one or more ProblemAnalyticsReport instances. Each instance provides a report on the analytics done in response to a specific ProblemAnalyticsRequest and the type of analytics required in that request.

According to at least some example embodiments, a ProblemAnalyticsJob provides a ProblemAnalyticsReport that documents the outcomes of the problem analysis. For example, the ProblemAnalyticsReport provides information on the presence of a network problem, the classification of the detected problem or the appropriate solution to address the detected problem.

The problem profile (also referred to here as "ProblemProfile", or "profile") comprises a data type that represents properties of the network problem detected by or reported to ProblemAnalytics. Fig. 11 shows a table illustrating attributes of ProblemProfile. The attributes include a ProblemID which comprises an identification/identifier of a network problem (which is also referred to here as "problem"). The problem profile data type defines characteristics of the network problem such as problem type (also referred to here as "ProblemType"), affected KPI(s) (also referred to here as "AffectedKPI(s)"), and associated runtime context. According to at least some example embodiments, given a request with problem information (also referred to here as "ProblemInfo") and runtime context, the ProblemAnalytics instantiates a ProblemAnalyticsJob that takes that ProblemInfo and runtime context and tries to match them with existing problem profiles to see where it matches. According to at least some example embodiments, the ProblemAnalytics also reads more data from the network guided by the content of ProblemInfo and runtime context to further analyse the problem.

According to at least some example embodiments, the affected KPIs are reported to the ProblemAnalytics by the consumer through a problem analytics request. According to at least some example embodiments, alternatively, the ProblemAnalytics detects anomalies in the network and automatically deduces affected KPIs.

According to at least some example embodiments, the associated runtime context to the problem is reported to the ProblemAnalytics by the consumer through a problem analytics request. According to at least some example embodiments, alternatively, the ProblemAnalytics automatically deduces the needed runtime context after detecting an anomaly and deducing affected KPIs.

According to at least some example embodiments, the ProblemType is decided by ProblemAnalytics after the reported/detected problem is analyzed. According to at least some example embodiments, alternatively, the consumer reports the ProblemType together with the problem through the problem analytics request in case such information is available at this time.

According to at least some example embodiments, the problem profile also contains a list of thresholds ("ThresholdPoints") which, if they occur concurrently, match the signature of the problem.

According to at least some example embodiments, the ProblemProfile is "learned" by the ProblemAnalytics about the different types of problems, e.g. by looking at/analyzing the statistics of the different problems. Given multiple requests with different ProblemInfo and the runtime context related with the ProblemInfo, according to at least some example embodiments, ProblemAnalytics identifies new profiles that do not match existing profiles and thereby matches the problems to the observed new profiles.

3GPP SA5 defines a list of problem types that correspond to specific analytics types that can be requested by consumers of an analytics service. Each problem has a specific set of characteristics and analytics solutions are designed to correspond to these specific characteristics. According to at least some example embodiments, these problem types provide a base for defining the problem profile data type that provides a description and relevant information of a network problem as described above.

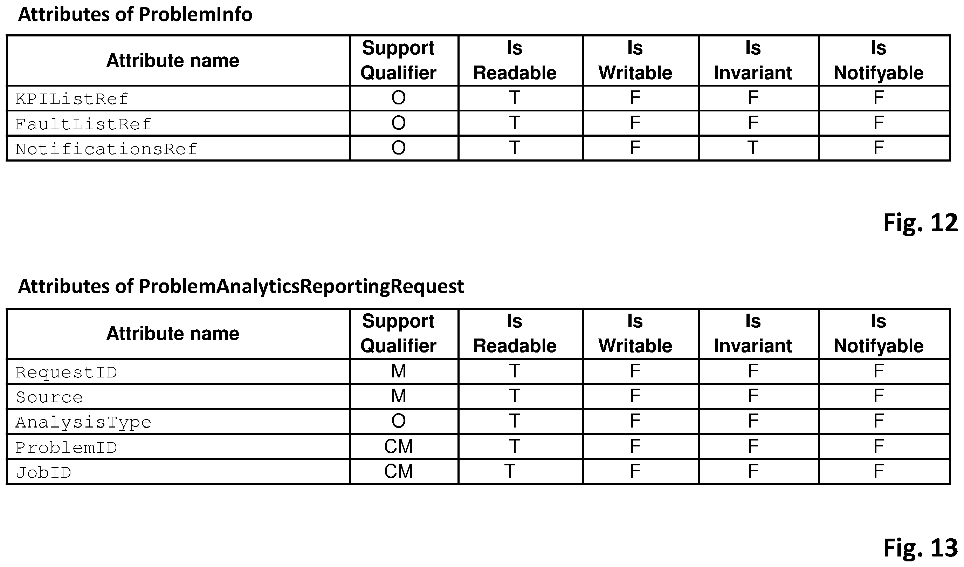

ProblemInfo is a data type that represents information available at the consumer side that identifies that there is most likely a problem that needs to be identified. Fig. 12 shows a table illustrating attributes of problem information ("ProblemInfo").

According to at least some example embodiments, ProblemInfo is in the form of affected KPIs, errors, faults, or threshold crossings. According to at least some example embodiments, alternatively, ProblemInfo is in the form of anomalous data collected from the network that deviates from normal/average behavior and requires further investigation to pin point the underlying problem if any.

According to at least some example embodiments, ProblemInfo includes references to a list of KPIs observations ("KPIListRef"), a list of fault observations ("FaultListRef"), or notifications ("NotificationsRef") that can be used to identify the problem.

ProblemAnalyticsReportingRequest is a data type that represents a problem analytics reporting request on MnS producer. Fig. 13 shows a table illustrating attributes of a problem analytics reporting request according to at least some example embodiments.

The ProblemAnalyticsReportingRequest is sent when the consumer does not require an analysis to be undertaken but requires a report about a previous analysis. Accordingly the consumer has information either about the specific job ("JobID") or about the specific problem ("ProblemID") whose reports the consumer wishes to receive. The consumer thus provides either of the problem or job identifiers as part of the ProblemAnalyticsReportingRequest (e.g. the request received in step S301).

The ProblemAnalyticsReportingRequest includes a request ID attribute which identifies the request.

Further, as shown in Fig. 13, the ProblemAnalyticsReportingRequest has a source attribute to identify where it is coming from and which may be used to prioritize among different sources. The sources may for example be an enumeration defined for network functions, operator roles, or other functional differentiations.

According to at least some example embodiments, the ProblemAnalyticsReportingRequest specifies an AnalysisType. The type of analytics/analysis is, for example, problem detection, as described above with reference to Fig. 2.

ProblemAnalyticsReport is a data type that represents a problem analytics report on MnS producer. According to at least some example embodiments, upon terminating a ProblemAnalyticsJob, a ProblemAnalyticsReport is sent by ProblemAnalytics to the consumers associated with the terminated job to notify them of the findings of the analysis performed. According to at least some example embodiments, alternatively, the ProblemAnalyticsReport is sent in response to a ProblemAnalyticsReportingRequest by an authorized consumer who is interested in the status and progress of an ongoing ProblemAnalyticsJob.

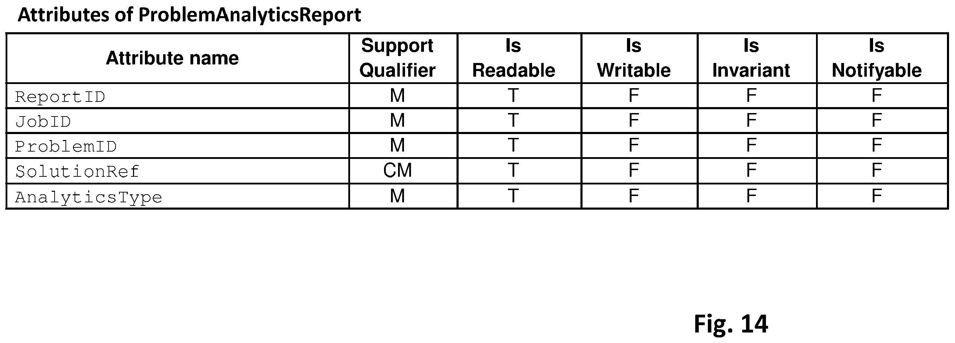

Fig. 14 shows a table illustrating attributes of a problem analytics report according to at least some example embodiments. The attributes comprise an identification/identifier of the report ("ReportID"), an identification/identifier of the job ("JobID"), an identification/identifier of the problem ("ProblemID"), a solution reference ("SolutionRef"), and an analytics type ("AnalyticsType"). The condition for the solution reference attribute is if the report includes a solution. The SolutionRef is in that case a distinguished name (DN) of an instance that is able to solve the identified problem. According to at least some example embodiments, such an instance comprises an MDAReport instance according to reference [1].

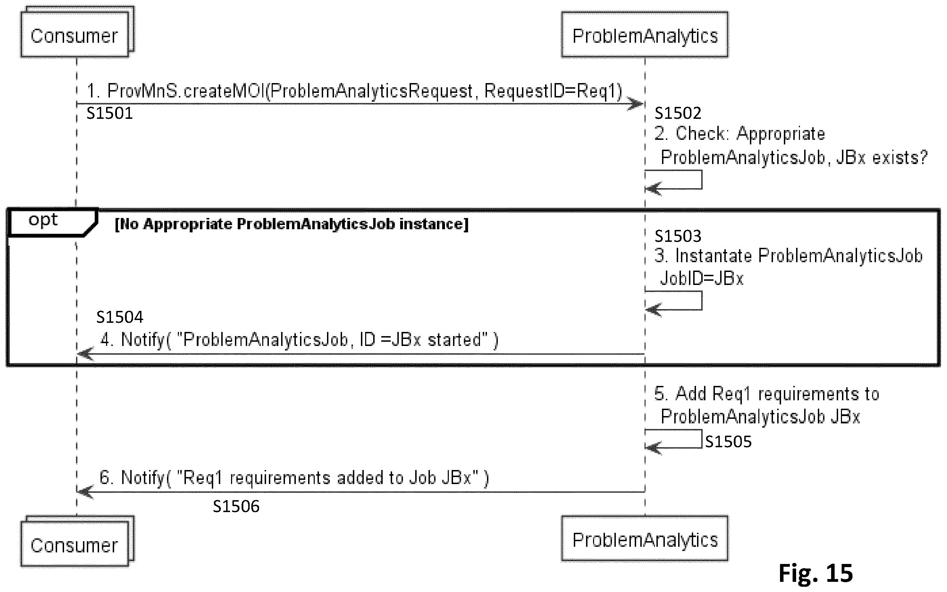

Now reference is made to Fig. 15 illustrating procedures and steps of requesting for problem analytics between an authorized consumer "Consumer" (which is a generic provisioning MnS consumer) and a problem analytics instance "ProblemAnalytics" (which is a generic provisioning MnS producer), according to at least some example embodiments.

The operation "createMOI" (S1501) is invoked by the generic provisioning MnS consumer requesting the generic provisioning MnS producer to create a Managed Object instance in the MIB maintained by the generic provisioning MnS producer. This operation will create only one Managed Object instance.

In particular, in S1501, the authorized consumer creates a ProblemAnalyticsRequest on the ProblemAnalytics instance, providing the attributes shown in Fig. 9. As described above, the request can be a problem detection, classification or/and solution search request.

In step S1502, the ProblemAnalytics performs a check on ongoing ProblemAnalyticsJobs.

If no matching job exists, in step S1503, the ProblemAnalytics instantiates an appropriate ProblemAnalyticsJob associated with the received request. In step S1504, the consumer is notified that a ProblemAnalyticsJob is instantiated and the Job ID is provided.

Otherwise, if a matching ProblemAnalyticsJob exists, in step S1505, the request is mapped to that job and the request's requirements are added to the job.

In step S1506, the consumer is notified that a ProblemAnalyticsJob is modified with the provided requirements and the Job ID is provided.

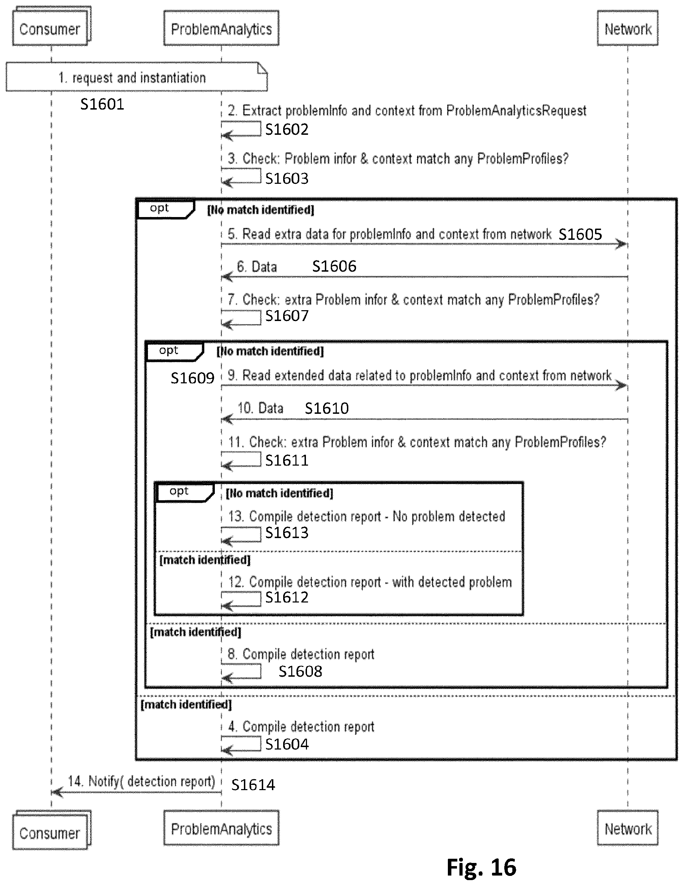

Besides the request for problem analysis and the subsequent report, according to at least some example embodiments, the internal task of problem analysis involves two major tasks as illustrated by Fig. 16. These tasks comprise (A) acquiring data for problem analysis, and (B) conducting problem analysis based on the acquired data which involves undertaking actions to capture insight on problems.

### (A) Acquiring data for problem analysis

After creation of a ProblemAnalyticsRequest on ProblemAnalytics (step S1601), in step S1602, the ProblemAnalytics reads ProblemInfo and context (runtime context) from the ProblemAnalyticsRequest sent from an authorized consumer.

Where necessary, in steps S1605 and S1606, the ProblemAnalytics reads extra data from network that matches or is related to submitted ProblemInfo. According to at least some example embodiments, the ProblemAnalytics reads data on the same network objects and KPIs but at different time intervals than those stated in ProblemInfo.

According to at least some example embodiments, in steps S1605 and S1606, the ProblemAnalytics also reads extra context data, e.g. reads data on other related metrics, or on user behavior.

According to at least some example embodiments, in steps S1609 and S1610, the ProblemAnalytics further reads extended data related to at least one of the following: ProblemInfo or runtime context.

### (B) Conducting problem analysis based on the acquired data

First, in step S1603, the ProblemAnalytics matches ProblemInfo to the existing ProblemProfiles (the problem profiles of known problems) to identify if ProblemInfo matches any of the known problems.

If no problem is identified, in step S1603, the ProblemAnalytics matches the combination of ProblemInfo and runtime context to the ProblemProfiles of the known problems.

If no problem is identified, in step S1607, the ProblemAnalytics extracts extra data and matches the extra data to the existing ProblemProfiles to identify if the extra data matches any of the known problems.

If no problem is identified, in step S1611, the ProblemAnalytics extracts extended data and matches the extended data to the existing ProblemProfiles to identify if the extended data matches any of the known problems.

Finally, in steps S1604, S1608, S1612 and S1613, the ProblemAnalytics compiles a detection report. If no problem is identified in any of the above cases (step S1613), the content of the detection report submitted in step S1614 indicates that no problem is identified; otherwise (steps S1604, S1608, S1612), the report submitted in step S1614 indicates the identified problem.

According to at least some example embodiments, given the previously determined ProblemProfile, the ProblemAnalytics searches existing solutions and provides the Solution ID of the most suitable solution for the given problem in the ProblemAnalyticsReport submitted in step S1614.

According to at least some example embodiments, requirements for reporting on ProblemAnalytics (the reporting including requesting reporting and reporting itself), e.g. as indicated in a ProblemAnalyticsRequest, are mapped to an existing ProblemAnalyticsJob instance if the stated reporting requirements match the characteristics of the ProblemAnalyticsJob instance. Alternatively, a new ProblemAnalyticsJob instance is created to match the indicated reporting requirements.

According to at least some example embodiments, ProblemAnalyticsReporting requirements are received through a ProblemAnalyticsRequest.

According to at least some example embodiments, the ProblemAnalytics has the capability and a control interface to inform a consumer about the analysis, i.e., to report on a ProblemAnalytics, ProblemAnalyticsRequests or ProblemAnalyticsJobs. According to at least some example embodiments, reporting is accomplished either via file- or streaming-based reporting mechanisms or via notifications.

According to at least some example embodiments, for a given request to analyze a problem, the ProblemAnalytics detects that the problem is not known, i.e. there is no match between the existing ProblemProfiles and the submitted ProblemInfo/runtime context (or with the extra/extended data derived using the ProblemInfo/runtime context). This implies that the submitted ProblemInfo/runtime context (and the extra/extended data derived using the ProblemInfo and/or runtime context) represents a new problem that is not known. Accordingly, a new ProblemProfile can be learned for the problem.

According to at least some example embodiments, for learning a new ProblemProfile, the ProblemAnalytics compiles the characteristics of the new problem, represented by the ProblemInfo/runtime context (and the extra/extended data derived using the ProblemInfo/runtime context), into the new ProblemProfile and stores the new ProblemProfile for the new problem.

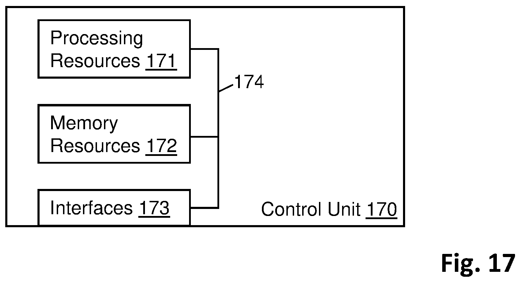

Now reference is made to Fig. 17 illustrating a simplified block diagram of a control unit 170 that is suitable for use in practicing at least some example embodiments. According to an implementation example, the analysis process of Fig. 3 is implemented by the control unit 170.

The control unit 170 comprises processing resources (e.g. processing circuitry) 171, memory resources (e.g. memory circuitry) 172 and interfaces (e.g. interface circuitry) 173, which are coupled via a wired or wireless connection 174.

According to an example implementation, the memory resources 172 are of any type suitable to the local technical environment and are implemented using any suitable data storage technology, such as semiconductor based memory devices, magnetic memory devices and systems, optical memory devices and systems, fixed memory and removable memory. The processing resources 171 are of any type suitable to the local technical environment, and include one or more of general purpose computers, special purpose computers, microprocessors, digital signal processors (DSPs) and processors based on a multi core processor architecture, as non-limiting examples.

According to an implementation example, the memory resources 172 comprise one or more non-transitory computer-readable storage media which store one or more programs that when executed by the processing resources 171 cause the control unit 170 to operate as problem analytics function as described above.

The term "non-transitory", as used herein, is a limitation of the medium itself (i.e., tangible, not a signal) as opposed to a limitation on data storage persistency (e.g., RAM vs. ROM).

Further, as used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

It is to be understood that the above description is illustrative and is not to be construed as limiting.

An apparatus of a communication network acquires information with respect to a problem related to the communication network, based on a request for problem analysis received from a consumer. The apparatus performs the problem analysis based on the information, comprising checking whether or not the information matches at least one of a plurality of problem profiles and, in case the information does not match at least one of the plurality of problem profiles, conducting learning of a new problem profile related to the problem based on the information. The apparatus returns a report on the problem analysis performed to the consumer.

## Claims

1. A method for use by an apparatus of a communication network, the method comprising:
receiving, by the apparatus, a request for problem analysis from a consumer (S301, S1601);
based on the request, acquiring, by the apparatus, information with respect to a problem related to the communication network (S303, S1602); wherein the information comprises at least one of the following:
problem information comprising at least one of: one or more key performance indicators related to the communication network, errors related to the communication network, faults related to the communication network, threshold crossings related to the communication network, or anomalous data collected from the communication network that deviates from normal or average behavior;
runtime context describing relevant information to the problem, and comprising at least one of: a time of day, a geographical scope, an identifier of a base station of the communication network, or an identifier of a cell of the communication network;
a type of the problem;
a type of a suspected problem; or
data extracted from the communication network;
performing, by the apparatus, the problem analysis based on the information (S305), the problem analysis comprising:
checking whether or not the information matches at least one of a plurality of problem profiles (S1603); and
in case the information does not match at least one of the plurality of problem profiles, compiling, by the apparatus, the information of the problem into a new problem profile and storing, by the apparatus, the new problem profile for the problem;
in case the information does not match at least one of the plurality of problem profiles, extracting, by the apparatus, data from the communication network, that is related to the information and checking whether or not the extracted data matches at least one of the plurality of problem profiles (S1605, S1606, S1607); and
in case the information or the extracted data matches at least one of the plurality of problem profiles, searching solutions to the problem based on the at least one of the plurality of problem profiles and applying at least one of the searched solutions to the communication network; and
returning, by the apparatus, a report on the problem analysis performed to the consumer (S307).

2. The method of claim 1, the problem analysis further comprising:
checking (S1502), based on the information, whether or not a job for processing the information is ongoing; and
in case such a job is not ongoing, instantiating (S1503) the job for processing the information.

3. The method of claim 2, the problem analysis further comprising:
in case such a job is ongoing, adding (S1505), to the job, requirements of a request which includes the information.

4. The method of any one of claims 1 to 3, the problem analysis further comprising:
monitoring and analyzing the communication network based on the request being a request for identifying any problem, in order to identify the problem.

5. The method of any one of claims 1 to 4, the problem analysis further comprising:
identifying, in response to the request being a request for classifying the problem, the information with respect to the problem.

6. The method of any one of claims 1 to 5,
wherein the checking is performed in response to the request being a request including the information with respect to the problem.

7. The method of any one of claims 1 to 6, wherein the report includes a result of at least one of the following: the checking, the identifying or the monitoring and analyzing.

8. The method of any one of claims 1 to 7, wherein a problem profile of the plurality of problem profiles comprises at least one of the following:
properties of a problem;
a type of a problem;
one or more key performance indicators;
a list of thresholds; or
runtime context describing relevant information to a problem, comprising at least one of: a time of day, a geographical scope, an identifier of a base station of the communication network, or an identifier of a cell of the communication network.

9. The method of claim 1 or 8, wherein the type of the problem comprises at least one of the following: handover, coverage, capacity or service related.

10. The method of any one of claims 1 to 9, wherein the apparatus comprises one of a standalone function in the communication network or a generic data analytics function of the communication network using a generic data analytics service.

11. A non-transitory computer-readable medium storing a program that, when executed by a computer, causes the computer to perform the method of any one of claims 1 to 10.

12. An apparatus comprising means for performing the method of any one of claims 1 to 10.

## Patentansprüche

1. Verfahren zur Verwendung durch eine Vorrichtung eines Kommunikationsnetzwerks, wobei das Verfahren umfasst:
Empfangen, durch die Vorrichtung, einer Anforderung zur Problemanalyse von einem Verbraucher (S301, S1601);
auf Grundlage der Anforderung, Erfassen, durch die Vorrichtung, von Informationen in Bezug auf ein Problem im Zusammenhang mit dem Kommunikationsnetzwerk (S303, S1602);
wobei die Informationen mindestens eines der folgenden Elemente umfassen:
Probleminformationen, die mindestens eines der folgenden Elemente umfassen: einen oder mehrere Leistungskennzahlen in Bezug auf das Kommunikationsnetzwerk, Fehler in Bezug auf das Kommunikationsnetzwerk, Störungen in Bezug auf das Kommunikationsnetzwerk, Schwellenwertüberschreitungen in Bezug auf das Kommunikationsnetzwerk, oder anomale Daten, die aus dem Kommunikationsnetzwerk gesammelt wurden und die vom normalen oder durchschnittlichen Verhalten abweichen;
einen Laufzeitkontext, der relevante Informationen zum Problem beschreibt, und mindestens eines der folgenden Elemente umfasst: eine Tageszeit, einen geografischen Bereich, eine Kennung einer Basisstation des Kommunikationsnetzwerks, oder eine Kennung einer Zelle des Kommunikationsnetzwerks;
einen Typ des Problems;
einen Typ eines vermuteten Problems; oder
aus dem Kommunikationsnetzwerk extrahierte Daten;
Durchführen, durch die Vorrichtung, der Problemanalyse auf Grundlage der Informationen (S305), wobei die Problemanalyse umfasst:
Überprüfen, ob die Informationen mit mindestens einem einer Vielzahl von Problemprofilen übereinstimmen oder nicht (S1603); und
für den Fall, dass die Informationen nicht mit mindestens einem der Vielzahl von Problemprofilen übereinstimmen, Zusammenstellen, durch die Vorrichtung, der Informationen des Problems in ein neues Problemprofil und Speichern, durch die Vorrichtung, des neuen Problemprofils für das Problem;
für den Fall, dass die Informationen nicht mit mindestens einem der Vielzahl von Problemprofilen übereinstimmen, Extrahieren, durch die Vorrichtung, von Daten aus dem Kommunikationsnetzwerk, die mit den Informationen zusammenhängen, und Überprüfen, ob die extrahierten Daten mit mindestens einem der Vielzahl von Problemprofilen übereinstimmen oder nicht (S1605, S1606, S1607); und
für den Fall, dass die Informationen oder die extrahierten Daten mit mindestens einem der Vielzahl von Problemprofilen übereinstimmen, Suchen von Lösungen für das Problem auf Grundlage des mindestens einen der Vielzahl von Problemprofilen und Anwenden mindestens einer der gesuchten Lösungen auf das Kommunikationsnetzwerk; und
Zurückgeben, durch die Vorrichtung, eines Berichts über die durchgeführte Problemanalyse an den Verbraucher (S307).

2. Verfahren nach Anspruch 1, wobei die Problemanalyse ferner umfasst:
Überprüfen (S1502), auf Grundlage der Informationen, ob ein Auftrag zur Verarbeitung der Informationen im Gange ist oder nicht; und
für den Fall, dass ein Auftrag nicht im Gange ist, Instanziieren (S1503) des Auftrags zur Verarbeitung der Informationen.

3. Verfahren nach Anspruch 2, wobei die Problemanalyse ferner umfasst:
für den Fall, dass ein Auftrag im Gange ist, Hinzufügen (S1505) der Anforderungen einer Anforderung, die die Informationen enthält, zu dem Auftrag.

4. Verfahren nach einem der Ansprüche 1 bis 3, wobei die Problemanalyse ferner umfasst:
Überwachen und Analysieren des Kommunikationsnetzwerks auf Grundlage dessen, dass die Anforderung eine Anforderung zur Identifizierung eines beliebigen Problems ist, um das Problem zu identifizieren.

5. Verfahren nach einem der Ansprüche 1 bis 4, wobei die Problemanalyse ferner umfasst:
Identifizieren, als Reaktion darauf, dass die Anforderung eine Anforderung zur Klassifizierung des Problems ist, der Informationen in Bezug auf das Problem.

6. Verfahren nach einem der Ansprüche 1 bis 5,
wobei die Überprüfung als Reaktion darauf durchgeführt wird, dass die Anforderung eine Anforderung ist, die die Informationen in Bezug auf das Problem enthält.

7. Verfahren nach einem der Ansprüche 1 bis 6, wobei der Bericht ein Ergebnis mindestens eines der folgenden Elemente enthält: der Überprüfung, der Identifizierung oder der Überwachung und Analyse.

8. Verfahren nach einem der Ansprüche 1 bis 7, wobei ein Problemprofil der Vielzahl von Problemprofilen mindestens eines der folgenden Elemente umfasst:
Eigenschaften eines Problems;
einen Typ eines Problems;
einen oder mehrere Leistungskennzahlen;
eine Liste von Schwellenwerten; oder
einen Laufzeitkontext, der relevante Informationen zu einem Problem beschreibt, umfassend mindestens eines der folgenden Elemente: eine Tageszeit, einen geografischen Bereich, eine Kennung einer Basisstation des Kommunikationsnetzwerks, oder eine Kennung einer Zelle des Kommunikationsnetzwerks.

9. Verfahren nach Anspruch 1 oder 8, wobei der Typ des Problems mindestens eines der folgenden Elemente umfasst: Übergabe, Abdeckung, Kapazität oder dienstbezogen.

10. Verfahren nach einem der Ansprüche 1 bis 9, wobei die Vorrichtung eine eigenständige Funktion im Kommunikationsnetzwerk oder eine generische Datenanalysefunktion des Kommunikationsnetzwerks, die einen generischen Datenanalysedienst verwendet, umfasst.

11. Nicht-transitorisches computerlesbares Speichermedium, das ein Programm speichert, das, wenn es von einem Computer ausgeführt wird, den Computer veranlasst, das Verfahren nach einem der Ansprüche 1 bis 10 auszuführen.

12. Vorrichtung, die Mittel zum Ausführen des Verfahrens nach einem der Ansprüche 1 bis 10 umfasst.

## Revendications

1. Procédé destiné à être utilisé par un appareil d'un réseau de communication, le procédé comprenant :
reception, par l'appareil, d'une requête d'analyse de problème provenant d'un consommateur (S301, S1601) ;
sur la base de la requête, acquisition, par l'appareil, d'informations relatives à un problème lié au réseau de communication (S303, S1602) ;
dans lequel les informations comprennent au moins l'un des éléments suivants :
des informations de problème comprenant au moins l'un des éléments suivants : un ou plusieurs indicateurs de performance clés liés au réseau de communication, des erreurs liées au réseau de communication, des défauts liés au réseau de communication, des franchissements de seuil liés au réseau de communication, ou des données anormales collectées à partir du réseau de communication qui dévient du comportement normal ou moyen ;
un contexte d'exécution décrivant des informations pertinentes relatives au problème, et comprenant au moins l'un des éléments suivants : une heure du jour, une portée géographique, un identifiant d'une station de base du réseau de communication, ou un identifiant d'une cellule du réseau de communication ;
un type du problème ;
un type d'un problème suspecté ; ou
des données extraites du réseau de communication ;
exécution, par l'appareil, de l'analyse de problème sur la base des informations (S305), l'analyse de problème comprenant :
vérification de si les informations correspondent ou non à au moins l'un d'une pluralité de profils de problème (S1603) ; et
dans le cas où les informations ne correspondent pas à au moins l'un de la pluralité de profils de problème, compilation, par l'appareil, des informations du problème en un nouveau profil de problème et stockage, par l'appareil, du nouveau profil de problème pour le problème ;
dans le cas où les informations ne correspondent pas à au moins l'un de la pluralité de profils de problème, extraction, par l'appareil, de données du réseau de communication, qui sont liées aux informations et vérification de si les données extraites correspondent ou non à au moins l'un de la pluralité de profils de problème (S1605, S1606, S1607) ; et
dans le cas où les informations ou les données extraites correspondent à au moins l'un de la pluralité de profils de problème, recherche de solutions au problème sur la base de l'au moins un de la pluralité de profils de problème et application d'au moins l'une des solutions recherchées au réseau de communication ; et
retour, par l'appareil, d'un rapport sur l'analyse de problème effectuée au consommateur (S307).

2. Procédé selon la revendication 1, l'analyse de problème comprenant en outre :
vérification (S1502), sur la base des informations, de si un travail de traitement des informations est en cours ou non ; et
dans le cas où un travail n'est pas en cours, instanciation (S1503) du travail de traitement des informations.

3. Procédé selon la revendication 2, l'analyse de problème comprenant en outre :
dans le cas où un travail est en cours, ajout (S1505), au travail, des exigences d'une requête qui inclut les informations.

4. Procédé selon l'une quelconque des revendications 1 à 3, l'analyse de problème comprenant en outre :
surveillance et analyse du réseau de communication sur la base de la requête étant une requête d'identification de tout problème, afin d'identifier le problème.

5. Procédé selon l'une quelconque des revendications 1 à 4, l'analyse de problème comprenant en outre :
identification, en réponse à la requête étant une requête de classification du problème, des informations relatives au problème.

6. Procédé selon l'une quelconque des revendications 1 à 5,
dans lequel la vérification est effectuée en réponse à la requête étant une requête incluant les informations relatives au problème.

7. Procédé selon l'une quelconque des revendications 1 à 6, dans lequel le rapport inclut un résultat d'au moins l'un des éléments suivants : la vérification, l'identification ou la surveillance et l'analyse.

8. Procédé selon l'une quelconque des revendications 1 à 7, dans lequel un profil de problème de la pluralité de profils de problème comprend au moins l'un des éléments suivants :
des propriétés d'un problème ;
un type d'un problème ;
un ou plusieurs indicateurs de performance clés ;
une liste de seuils ; ou
un contexte d'exécution décrivant des informations pertinentes relatives à un problème, comprenant au moins l'un des éléments suivants : une heure du jour, une portée géographique, un identifiant d'une station de base du réseau de communication, ou un identifiant d'une cellule du réseau de communication.

9. Procédé selon la revendication 1 ou 8, dans lequel le type du problème comprend au moins l'un des éléments suivants : transfert intercellulaire, couverture, capacité ou lié au service.

10. Procédé selon l'une quelconque des revendications 1 à 9, dans lequel l'appareil comprend l'une d'une fonction autonome dans le réseau de communication ou d'une fonction générique d'analyse de données du réseau de communication utilisant un service générique d'analyse de données.

11. Support non transitoire lisible par ordinateur stockant un programme qui, lorsqu'il est exécuté par un ordinateur, amène l'ordinateur à exécuter le procédé selon l'une quelconque des revendications 1 à 10.

12. Appareil comprenant des moyens pour exécuter le procédé selon l'une quelconque des revendications 1 à 10.
